(19) Europäisches Patentamt
European Patent Office
Office européen des brevets

(11) **EP 3 443 311 B1**

(12) **EUROPÄISCHE PATENTSCHRIFT**

(45) Veröffentlichungstag und Bekanntmachung des Hinweises auf die Patenterteilung:
**15.09.2021 Patentblatt 2021/37**

(21) Anmeldenummer: **17716881.2**

(22) Anmeldetag: **12.04.2017**

(51) Int Cl.:
***G01K 7/18*** (2006.01)

(86) Internationale Anmeldenummer:
**PCT/EP2017/058631**

(87) Internationale Veröffentlichungsnummer:
**WO 2017/178463 (19.10.2017 Gazette 2017/42)**

(54) **DÜNNSCHICHTSENSORELEMENT FÜR EIN WIDERSTANDSTHERMOMETER**

THIN-LAYER SENSOR ELEMENT FOR A RESISTANCE THERMOMETER

ELÉMENT DE DÉTECTION À COUCHE MINCE POUR UN THERMOMÈTRE À RÉSISTANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.04.2016 DE 102016106675**

(43) Veröffentlichungstag der Anmeldung:
**20.02.2019 Patentblatt 2019/08**

(73) Patentinhaber: **Innovative Sensor Technology IST AG**
**9642 Ebnat-Kappel (CH)**

(72) Erfinder: **HOLOUBEK, Jiri**
**756 61 Roznov pod Radhostem (CZ)**

(74) Vertreter: **Andres, Angelika Maria**
**Endress+Hauser Group Services (Deutschland) AG+Co. KG**
**Colmarer Straße 6**
**79576 Weil am Rhein (DE)**

(56) Entgegenhaltungen:
**EP-A1- 2 261 624       EP-A2- 0 446 667**
**DE-A1-102012 204 817    DE-B3-102004 034 185**
**US-A- 3 781 749**

## Beschreibung

Die Erfindung betrifft einen Dünnschichtsensorelement zur Bestimmung und/oder Überwachung der Temperatur, sowie ein Widerstandsthermometer mit dem erfindungsgemäßen Dünnschichtsensorelement.

Für Widerstandsthermometern haben sich als Kaltleiter bezeichnete Materialen als besonders geeignet erwiesen, da bei Kaltleitern mit steigender Temperatur der Widerstand in erster Ordnung linear zunimmt. Unter den Kaltleitern ist wiederum Platin ein bevorzugtes Material, da Platin eine insgesamt höchstens quadratische Abhängigkeit des Widerstands von der Temperatur aufweist. Widerstandsthermometer sind üblicherweise darauf ausgelegt, dass sie bei einer Referenztemperatur von 0°C einen bestimmten nominellen Widerstand aufweisen. Hierbei sind die als Pt100 (100 Ohm) und Pt1000 (1 kOhm) bezeichneten Widerstandsthermometer weit verbreitet.

Aufgrund ihrer Miniaturisierbarkeit und der schnellen Ansprechzeit haben in den letzten Jahren auf Dünnschichtsensorelementen basierende Widerstandsthermometer gegenüber gewickelten Widerstandsthermometern an Bedeutung gewonnen. Die Dünnschichtsensorelemente bestehen dabei aus einer dünnen Widerstandsstruktur mit einer Dicke von einigen Mikrometern, welche auf einem elektrisch isolierenden Substrat (beispielsweise einer Keramik) angeordnet ist. Üblicherweise ist die Widerstandsstruktur durch eine Abdeckungsschicht (beispielsweise aus Glas) isoliert und geschützt. Der Widerstand wird im Wesentlichen über die Länge der Widerstandsstruktur eingestellt. Dabei weist die Widerstandsstruktur auf dem Substrat in der Regel einen mäanderförmigen Verlauf auf, um so die benötigte Länge für einen messbaren Widerstandswert zu erreichen. Derartige Dünnschicht-Widerstandsthermometer werden von der E+H Gruppe in unterschiedlichen Ausgestaltungen hergestellt und zum Einsatz in vielfältigen Anwendungen vertrieben.

Bei der Auslegung des Dünnschichtsensorelements wird die Widerstandsstruktur mit einer bestimmten Länge zunächst durch eine grobe Strukturierung aus einer Widerstandsschicht gewonnen. Für die Fein- Einstellung auf einen bestimmten Widerstandswert sind Trimmschleifen vorgesehen. Die Widerstandsschicht wird beispielsweise durch Ätzen oder Lasern strukturiert. In der Praxis ist diese genaue Auslegung sehr anspruchsvoll, schon alleine weil die Kontrolle über die Temperatur schwierig ist. Oftmals wird daher die Widerstandsstruktur auch bei einer anderen, von der nominellen Temperatur verschiedenen Temperatur ausgelegt und mit einer entsprechenden Korrektur rechnerisch nachkorrigiert.

Aufgrund der anspruchsvollen Auslegung können Produktionsschwankungen in der Fertigung von Widerstandsthermometern zu Temperaturabweichungen führen. Dabei sollte der Hersteller ein Widerstandsthermometer einer genormten Genauigkeitsklasse zuordnen können. So klassifiziert die europäische Norm DIN EN 60751:2009-05 die Pt Widerstandsthermometer anhand von einer erlaubten maximalen Grenzabweichung $tg$ des gemessenen Temperaturwert vom wahren Temperaturwert:

$$tg = t0 + \delta \, |\mathrm{t}|$$

Dabei ist |t| durch den Betrag der Umgebungstemperatur vorgegeben, während $t0$ und $\delta$ innerhalb der Genauigkeitsklasse definiert sind. In der häufig verwendeten Klasse B ist beispielsweise $t0 = 0.3°C$ und $\delta = 0.005$, so dass bei einer Umgebungstemperatur von 100° C eine maximale Grenzabweichung von $tg = \pm 0.8°C$ erlaubt ist. In der Klasse AA (welche der früheren 1/3 DIN Norm entspricht), ist dagegen mit $t0 = 0.1°C$ und $\delta = 0.0017$ nur noch eine maximale Grenzabweichung von $tg = \pm 0.27°C$ erlaubt. Der anspruchsvollen Auslegung stehen also sehr hohe Anforderungen an die Genauigkeit des Widerstandsthermometers gegenüber.

Werden Kaltleiter für Tieftemperaturanwendungen, d.h. bei Umgebungstemperaturen von kleiner als 0°C, eingesetzt, so bedeutet eine hohe Genauigkeitsanforderung an die Temperaturmessung, dass eine hohe Genauigkeit der Widerstandmessung bei insgesamt sehr kleinen Widerständen erreichen werden muss. Insbesondere in diesem Fall ist daher die genaue Temperaturmessung sehr anspruchsvoll.

Typischerweise erfolgt die elektrische Kontaktierung der in einem Widerstandsbereich verlaufenden Widerstandsstruktur eines Dünnschichtsensorelements über zwei Zwischenleiter, d.h. in einer Zweileiterkontaktierung. Dabei ist in einem Kontaktbereich in jeweils zwei voneinander isolierten Kontaktflächen ein erster Abschnitt der Widerstandsstruktur mit einem ersten Zwischenleiter und ein zweiter Abschnitt der Widerstandsstruktur mit einem zweiten Zwischenleiter verbunden. Die zwei Zwischenleiter führen dann außerhalb des mit einer Abdeckungsschicht geschützten Kontaktbereichs. An diese beiden, außerhalb des Kontaktbereichs geführten Zwischenleiter ist jeweils eine Verbindung mit zwei Anschlussleitern vorgesehen. Durch die Verbindung der insgesamt vier Anschlussleiter mit den beiden nach außen führenden Zwischenleitern des Dünnschichtsensorelements werden so zwei Referenzpunkte einer Vierleiterschaltung ausgebildet. Die so gebildete Vierleiterschaltung eignet sich für sehr genaue Widerstandsmessungen, da im Fall einer konstanten Stromquelle und eines Spannungsmessgeräts mit einem sehr hohen Innenwiderstand nur der zwischen den Referenzpunkten vorliegende Widerstand gemessen wird, ohne dass ein Einfluss der Anschlussleiter berücksichtigt werden müsste.

Im Fall der oben beschriebenen üblicherweise verwendeten Vierleiterschaltung liegen die beiden Referenzpunkte der Vierleiterschaltung allerdings außerhalb der Widerstandsbereichs und des Kontaktbereichs, da die Referenzpunkte der Vierleiterschaltung erst durch die Verbindung der beiden nach außen führenden Zwischenleiter mit den jeweils zwei Anschlussleitern gebildet werden. Der gemessene Widerstand zwischen den Referenzpunkten setzt sich daher aus dem Gesamtwiderstand der Widerstandsstruktur, der Verbindung der Widerstandsstruktur mit den Zwischenleitern in den Kontaktflächen, sowie dem Widerstand der Zwischenleiter zusammen.

Für eine derartige Zweileiterkontaktierung übersetzten sich daher hohe Anforderungen an die Genauigkeit der Widerstandsmessung automatisch in hohe Anforderungen an die Genauigkeit bei der Auslegung des gesamten Widerstands, bestehend aus der Widerstandsstruktur, der Verbindung der Widerstandsstruktur mit den Zwischenleitern in den Kontaktflächen, sowie den Zwischenleitern. Eine kleine Schwankung in der Beschaffenheit der Zwischenleiter (z.B. deren Länge) kann daher eine große Auswirkung auf den Widerstand der Widerstandsmessung und damit letztendlich auf die Genauigkeit des Widerstandsthermometers haben.

Ein weiterer Einfluss auf die Genauigkeit kann auch aufgrund der Verkapselung der Widerstandsstruktur zwischen dem Substrat und der Abdeckung vorliegen. Dies liegt daran, dass die Kombination aus Substrat, Widerstandsstruktur bzw. Kontaktflächen und Abdeckungsschicht einen unterschiedlichen Wärmeausdehnungskoeffizienten als die Widerstandsstruktur selbst aufweist. Starke Temperaturschwankungen führen damit zwangsläufig zu starken mechanischen Spannungen, welche auf die Widerstandsstruktur wirken. Da kaltleitende Materialen wie beispielsweise Platin immer auch starke piezoresistive Eigenschaften aufweisen, können diese mechanischen Spannungen wiederum auf den Widerstand der Widerstandsstruktur rückwirken. Dadurch werden letztendlich unkontrollierbare Hystereseeffekte in der Widerstand/Temperatur Widerstandskennlinie verursacht. Die Hystereseeffekte können zu einem gewissen Grad dadurch reduziert werden, dass das verkapselte Dünnschichtsensorelement nach der Fertigung mehreren Heiz- und Kühlzyklen ausgesetzt wird.

Eine andere Möglichkeit besteht darin, derartige mechanische Spannungen im Vorfeld auszuschließen. Dafür müssen die thermischen Ausdehnungskoeffizienten des Substrats und der Abdeckung an den thermischen Ausdehnungskoeffizienten dem der Widerstandsstruktur angepasst werden. Dieser Ansatz wird in der DE 00 10 2007 02 34 34 A1 verfolgt. Eine derartige Anpassung der thermischen Ausdehnungskoeffizienten ist allerdings aufwendig. Dabei ist festzuhalten, dass insbesondere im Kontaktbereich der Einfluss von unterschiedlichen Wärmeausdehnungskoeffizienten besonders groß ist. Dies ist durch die große Dicke des Dünnschichtsensorelements im Kontaktbereich bedingt. Die Dicke im Kontaktbereich ist beispielsweise aufgrund der Schweißstellen zur Verbindung der Widerstandsstruktur mit den Zwischenleitern in den Kontaktflächen erforderlich. Sie ist insbesondere im Verhältnis zur Dicke des Dünnschichtsensorelements im Widerstandsbereich groß.

Zusammenfassend wird die Genauigkeit eines Widerstandsthermometers mit einem Dünnschichtsensorelement nicht nur durch die Auslegung der Widerstandsstruktur selbst, sondern auch durch die Zwischenleiter sowie der Verkapselung der Widerstandsstruktur zwischen Substrat und Abdeckungsschicht maßgeblich bestimmt. Dies ist im Wesentlichen durch die Kontaktierung des Dünnschichtsensorelements bedingt, die dazu führt, dass die Referenzpunkte der Vierleiterschaltung außerhalb der Widerstandsstruktur des Dünnschichtsensorelements selbst liegen. Dadurch wird ein Großteil einer hohen theoretischen Genauigkeit, welche durch eine sehr sorgfältige Auslegung der Widerstandsstruktur selbst erreicht werden könnte, wieder zunichtegemacht. Die Druckschrift EP 0 446 667 A2 offenbart einen Temperatursensor, der auf einer elektrisch leitenden Schicht beruht. Die Schickt wird auf einem elektrisch isolierenden Substrat dünnschnittechnisch in Mäanderform aufgebracht.

Der Erfindung liegt daher die Aufgabe zugrunde, ein Dünnschichtsensorelement und ein Widerstandsthermometer zur Bestimmung und/oder Überwachung der Temperatur von großer Genauigkeit bereitzustellen.

Die Aufgabe wird gelöst durch ein Dünnschichtsensorelement zur Bestimmung und/oder Überwachung der Temperatur, wie im Anspruch 1 definiert wird.

Das Dünnschichtsensorelement, welches zur Bestimmung und/oder Überwachung der Temperatur eingesetzt werden kann, zeichnet sich also dadurch aus, das durch die Verzweigung des ersten und des zweiten Abschnitts der Widerstandsstruktur in die jeweils zumindest zwei zueinander parallel geschalteten Zweige zwei Referenzpunkte gebildet werden, welche innerhalb des Widerstandsbereichs (d.h. des Bereichs, in dem die Widerstandsstruktur verläuft) angeordnet sind. Da die insgesamt mindestens vier Zweige in jeweils voneinander isolierten Kontaktflächen im Kontaktbereich mit mindestens vier Zwischenleitern verbunden sind, handelt es sich bei dem erfindungsgemäßen Dünnschichtsensorelement um ein echtes Vierleitersensorelement.

Erfindungsgemäß besteht die Widerstandsstruktur aus einem kaltleitendem Material. Bevorzugt ist der Kaltleiter im Wesentlichen aus Platin und/oder Nickel.

Erfindungsgemäß ist im Widerstandsbereich eine erste Abdeckungsschicht zur Abdeckung der Widerstandsstruktur vorgesehen ist. Hierbei ist es auch möglich, dass die Abdeckungsschicht aus verschiedenen Schichten gebildet ist, wobei die die Widerstandsschicht abdeckende Abdeckungsschicht aus einem im Wesentlichen nicht-leitenden bzw. isolierenden Material ist, beispielsweise ein Glas und/oder eine Keramik.

Erfindungsgemäß ist für den Kontaktbereich eine zweite Abdeckungsschicht vorgesehen. Auch diese Abdeckungsschicht kann aus unterschiedlichen Schichten bestehen.

Zum Beispiel ist die Dicke des Dünnschichtsensorelements im Widerstandsbereich kleiner als im Kontaktbereich.

Über zwei der mindestens vier Zwischenleiter, welche jeweils anhand einer der beiden Zweige mit dem ersten und zweiten Abschnitt der Widerstandsstruktur verbunden sind, kann die Widerstandsstruktur des Dünnschichtsensorelements mit einem konstanten Strom beaufschlagt werden. Anhand der zwei weiteren Zwischenleiter, welche mit den zwei weiteren Zweigen des ersten und zweiten Abschnitts der Widerstandsstruktur verbunden sind, kann mit einem Spannungsmessgerät die über die beiden Referenzpunkte abfallende Spannung gemessen werden. Damit kann das erfindungsgemäße Dünnschichtsensorelement in einer echten Vierleiterschaltung betrieben werden. Echt bedeutet im Rahmen der Anmeldung, dass mit dem erfindungsgemäßen Dünnschichtsensorelement nur der Widerstand der Widerstandsstruktur zwischen dem ersten und zweiten Referenzpunkt gemessen werden kann, wobei die beiden Referenzpunkte der Vierleiterschaltung Bestandteil der Widerstandsstruktur selbst sind.

Die Referenzpunkte werden also nicht wie üblich erst durch die Verbindung von zwei außerhalb des Dünnschichtsensorelements angeordneten Zwischenleitern mit jeweils zwei Anschlussleitern gebildet. Somit sind im Wesentlichen auch die Einflüsse der Zwischenleiter auf das Spannungssignal der Vierleiterschaltung ausgeschlossen.

Ferner ist für das erfindungsgemäße Dünnschichtsensorelement auch der Einfluss des Kontaktbereichs, etwa durch mechanischen Spannungen im Bereich der Kontaktflächen, auf das Spannungssignal der Vierleiterschaltung minimiert. Dies wird aufgrund der vier voneinander isolierten Kontaktflächen ermöglicht, in denen die verschiedenen, zueinander parallel geschalteten Zweige der Widerstandsstruktur mit den Zwischenleitern kontaktiert sind.

Aus diesen Gründen sind bei dem erfindungsgemäßen Dünnschichtsensorelement die oben genannten Einflüsse auf die Genauigkeit der Widerstandsmessung im Vorhinein eliminiert. Somit wird ein Dünnschichtsensorelement bereitgestellt, welches auf einfache Art und Weise eine Temperaturmessung von hoher Genauigkeit ermöglicht.

Gegebenenfalls sind im Rahmen der Erfindung noch weitere Zweige des ersten und zweiten Abschnitts der Widerstandsstruktur vorgesehen, welche jeweils zu den zwei Zweige parallel geschaltet sind. Die weiteren Zweige können in weiteren Kontaktflächen mit weiteren Zwischenleitern verbunden sein. Dadurch können beispielsweise mehrere gleichzeitige Spannungsmessungen durchgeführt werden.

Die Verzweigung des ersten und des zweiten Abschnitts der Widerstandsstruktur in parallele Zweige und Ausbildung der Referenzpunkte kann im Rahmen der Strukturierung der Widerstandsschicht erfolgen. Dabei gibt es im Prinzip keine Einschränkung an die Anordnung der beiden Referenzpunkte innerhalb des Widerstandsbereichs. Je nach Art des Dünnschichtsensorelements bzw. Anzahl der Schichten, deren Dimensionierung und den verwendeten Materialen kann es dabei eine bevorzugte Anordnung der Referenzpunkte geben.

In einer Weiterbildung der Erfindung sind der erste und/oder der zweite Referenzpunkt in einem dem Kontaktbereich zugewandten Endbereich des Widerstandsbereichs angeordnet. In dieser Weiterbildung können die Referenzpunkte also beispielsweise nahe an der Verbindung des Widerstandsbereichs mit dem angrenzenden Kontaktbereich angeordnet sein.

In einer alternativen Weiterbildung der Erfindung sind der erste und/oder der zweite Referenzpunkt einem Bereich angeordnet sind,
welcher Bereich zwischen einem dem Kontaktbereich abgewandten Endbereich des Widerstandsbereichs und einem dem Kontaktbereich zugewandten Endbereich des Widerstandsbereichs liegt. Beispielsweise ist es möglich, die Referenzpunkte mittige zwischen dem dem Kontaktbereich abgewandten Endbereich des Widerstandsbereichs und dem dem Kontaktbereich zugewandten Endbereich des Widerstandsbereichs anzuordnen. Diese Anordnungen können beispielsweise von Vorteil sein, wenn im Übergangs zwischen Widerstandsbereich und Kontaktbereich hohe mechanische Spannungen vorliegen. Eine andere Möglichkeit ist, zwei verschiedene Kontaktbereiche vorzusehen, welche an sich gegenüberliegenden Endbereichen des Widerstandsbereich angrenzen.

Durch die Lage der Referenzpunkte des erfindungsgemäßen Dünnschichtsensorelements sind Einflüsse durch mechanische Spannungen im Kontaktbereich im Wesentlichen ausgeschlossen. Es gibt allerdings noch verbleibende mechanische Spannungen im Widerstandsbereich. Werden diese auch noch ausgeschlossen, kann mit dem erfindungsgemäßen Dünnschichtsensorelement ein besonders genaues Widerstandsthermometer gebildet werden. Daher beinhaltet eine besonders bevorzugte Weiterbildung der Erfindung, dass die Gesamtheit aus Substrat, Widerstandsstruktur und Abdeckungsschicht im Widerstandsbereich einen effektiven thermischen Ausdehnungskoeffizienten $TCE_{eff}$ aufweist, der größer oder gleich dem thermischen Ausdehnungskoeffizienten des Materials der Widerstandsstruktur als Bulk-Metall ist.

Der effektive Wärmeausdehnungskoeffizient $TCE_{eff}$ ist im Wesentlichen durch folgende Formel näherungsweise gegeben

$$TCE_{eff} = \frac{\sum_{i=1}^{N} TCE_i * d_i * E_i * F_i}{\sum_{i=1}^{N} d_i * E_i * F_i} \quad ,$$

wobei N die Anzahl der Bestandteile des Dünnschichtsensorelement ist, wobei die Laufzahl i die einzelnen Bestandteile bezeichnet, wobei $TCE_i$ den Wärmeausdehnungskoeffizienten, $d_i$ die Dicke und $E_i$ die Elastizität der

einzelnen Bestandteile bezeichnet, und wobei Fi einen geometrischen Faktor berücksichtigt. Das Substrat kann auch aus mehreren Schichten bestehen, solange zumindest die Oberfläche des Substrats nicht-leitend ist.

Die Bestandteile des Dünnschichtsensorelements sind in dieser Weiterbildung der Erfindung also derartig ausgestaltet und aufeinander abgestimmt sind, dass der resultierende effektive thermische Ausdehnungskoeffizient $TCE_{eff}$ einem vorgebbaren Wert entspricht. Der effektive thermische Ausdehnungskoeffizient kann durch die Wahl der Materialen sowie die Anzahl und Dimensionierung der Schichten eingestellt werden. Das Substrat hat in dieser Weiterbildung einen thermischen Ausdehnungskoeffizienten, der im Wesentlichen größer als 10,5 ppm/K ist. Hierbei sei auf den Offenbarungsgehalt der DE 00 10 2007 02 34 34 A1 verwiesen.

In einer Weiterbildung der Erfindung ist das Substrat ein zumindest teilweise keramisches Substrat.

In einer weiteren Weiterbildung der Erfindung weist das Substrat Aluminiumoxid und/oder Zirkonoxid auf.

In einer Ausgestaltung der Erfindung ist die Oberflächenschicht des Substrats nicht-leitend, wobei die nicht-leitende Oberflächenschicht des Substrats eine minimale Schichtdicke von 10 Mikrometer aufweist.

In einer weiteren Ausgestaltung des Dünnschichtsensorelement sind die Zwischenleiter alle aus dem gleichen Material. Beispielsweise können in dieser Ausgestaltung die Zwischenleiter aus dem gleichem Material wie dem der Widerstandsschicht sein. Der Vorteil dieser Ausgestaltung ist, dass auf diese Art keine bzw. minimale Thermospannungseffekte im Kontaktbereich auftreten.

In einer anderen Ausgestaltung kann für das Material der Zwischenleiter ein anderes als das der Widerstandsschicht gewählt werden. In Betracht kommen hierbei beispielsweise Nickel, Silber, oder einige Metalllegierungen wie Neusilber, die man für Kompensationsleitungen bei Platinthermoelementen verwendet. Auf diese Weise werden nur geringe Thermospannungen erzeugt. Insbesondere kann weiter das Material für die Zwischenleiter so gewählt werden, dass es dem der Anschlussleiter entspricht. Als Anschlussleiter werden im Rahmen der Erfindung diejenigen Leiter bezeichnet, welche zum Betreiben des Dünnschichtsensorelements in Vierleiterschaltung an die nach außen führenden Zwischenleiter des Dünnschichtsensorelements angeschlossen werden. Diese Ausgestaltung ist weiter vorteilhaft zur Minimierung der Thermospannungseffekte, da der Temperaturgradient in der Regel im Kontaktbereich geringer ist als im Bereich der Anschlüsse zwischen den Zwischenleitern und den Anschlussleitern.

In einer weiteren Ausgestaltung weist die Widerstandsstruktur eine Schichtdicke von 0.1 Mikrometer-10 Mikrometer auf.

Typischerweise erfordern die Schweißstellen der Kontaktflächen eine gewisse Dicke der Abdeckungsschicht des Kontaktbereich, so dass die Abdeckungsschicht im Kontaktbereich wesentlich größer als die Abdeckungsschicht im Widerstandsbereich ist. In einer weiteren Ausgestaltung der Erfindung weist daher die Abdeckungsschicht im Widerstandsbereich eine maximale Schichtdicke von 50 Mikrometer auf, während die Abdeckungsschicht im Kontaktbereich eine maximale Schichtdicke von 2.0 Millimeter aufweist.

Die Erfindung beinhaltet weiter ein Widerstandsthermometer mit dem erfindungsgemäßen Dünnschichtsensorelement. Dabei weist das Widerstandsthermometer eine Regel-/Auswerteeinheit auf, wobei die Zwischenleiter des Dünnschichtsensorelements mit der Regel-/Auswerteeinheit verbunden sind, und wobei die Regel-/Auswerteeinheit dazu ausgestaltet ist, mittels der zumindest vier Zwischenleiter das Dünnschichtsensorelement in einer Vierleiterschaltung zu betreiben, den Widerstand der Widerstandsstruktur zwischen dem ersten Referenzpunkt und dem zweiten Referenzpunkt zu ermitteln, und aus dem ermittelten Widerstand die an der Widerstandsstruktur vorliegende Temperatur zu bestimmen.

Die Erfindung betrifft zusammenfassend ein Dünnschichtsensorelement zur Bestimmung und/oder Überwachung der Temperatur. Dazu ist eine Widerstandsstruktur vorgesehen, die auf einem Substrat in einem Widerstandsbereich angeordnet ist. Die Widerstandsstruktur ist so strukturiert ist, dass sich ein erster Abschnitt der Widerstandsstruktur in einem ersten Referenzpunkt in zumindest zwei Zweige verzweigt, und dass sich ein zweiter Abschnitt der Widerstandsstruktur in einem zweiten Referenzpunkt in zumindest zwei weitere Zweige verzweigt. In einem Kontaktbereich werden die vier Zweige mit vier Zwischenleitern in vier voneinander isolierten Kontaktflächen verbunden. Daher ist das Dünnschichtsensorelement ein echtes Vierleitersensorelement, wobei die Referenzpunkte der Vierleiterschaltung innerhalb des Widerstandsbereichs liegen. Das Widerstandsthermometer mit dem erfindungsgemäßen Dünnschichtsensorelement ist von großer Genauigkeit.

Die Erfindung wird anhand der nachfolgenden Figuren näher erläutert. Es zeigt:

Fig. 1a-c: eine Aufsicht auf ein Dünnschichtsensorelement gemäß dem Stand der Technik und gemäß der Erfindung

Fig. 2: eine Seitenansicht des erfindungsgemäßen Dünnschichtsensorelements

Fig. 3: eine Aufsicht auf das erfindungsgemäße Widerstandsthermometer

Fig. 4: die Genauigkeit des erfindungsgemäßen Widerstandsthermometers

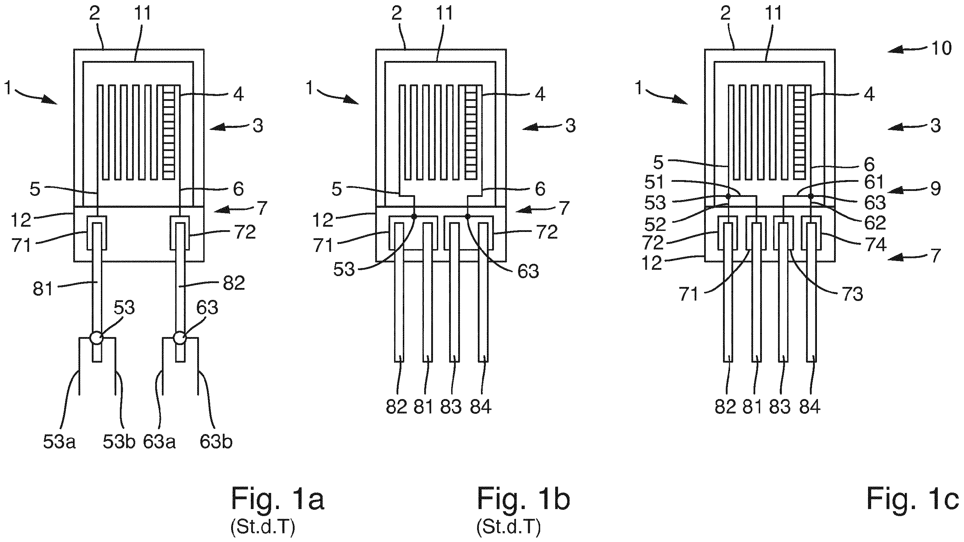

In Fig. 1a ist eine schematische Aufsicht auf ein Dünnschichtsensorelement 1 gemäß dem Stand der Technik gezeigt. Das Dünnschichtsensorelement 1 umfasst die auf dem Substrat 2 angeordnete, im Widerstandsbereich 3 mäanderförmig verlaufende Widerstandsstruktur 4. Deutlich erkennbar sind auch die Trimmschleifen im rechten Randbereich des Widerstandsbereichs 3. An den Widerstandsbereich 3 grenzt der Kontaktbereich 7 an, in dem der erste Abschnitt 5 der Widerstandsstruktur 4 mit dem ersten Zwischenleiter 81 in der ersten Kontaktfläche 71 verbunden ist, und in dem der zweite Abschnitt 6 der Widerstandsstruktur 4 mit dem zweiten Zwischenleiter 82 in der zweiten Kontaktfläche 72 verbunden ist. Der Widerstandsbereich 3 ist mit der ersten Abdeckungsschicht 11 zur Abdeckung der Widerstandsstruktur 4 und der Kontaktbereich mit der zweiten Abdeckungsschicht 12 zur Abdeckung der Kontaktflächen 71,72 geschützt. Außerhalb des Kontaktbereichs 3 sind die beiden Zwischenleiter 81,82 in den beiden Referenzpunkten 53, 63 mit jeweils zwei Anschlussleitern 53a,53b, 63a, 63b verbunden. In diesem Dünnschichtsensorelement 1 gemäß dem Stand der Technik setzt sich der Gesamtwiderstand zwischen den Referenzpunkten 53,63 aus dem Widerstand im Widerstandsbereich 4, dem Widerstand im Kontaktbereich 7 und dem Widerstand der Zwischenleiter 81,82 zusammen.

In Fig. 1b ist eine schematische Ansicht auf ein weiteres Dünnschichtsensorelement 1 gemäß dem Stand der Technik gezeigt. Im Gegensatz zu dem Dünnschichtsensorelement 1 aus Fig. 1a weist hier das Dünnschichtsensorelement 1 einen Vierleiteranschluss auf. Der Vierleiteranschluss wird allerdings durch die Verbindung des ersten Abschnitts 5 der Widerstandsstruktur 4 mit einem ersten Paar Zwischenleiter 81,82 und durch die Verbindung des zweiten Abschnitts 6 der Widerstandsstruktur 4 mit einem zweiten Paar Zwischenleiter 83,84 gebildet, wobei die Referenzpunkte 53,63 der Vierleiterschaltung auch in den Kontaktflächen 71,72 des Kontaktbereichs 7 angeordnet sind. Damit trägt für dieses Dünnschichtsensorelement auch der im Kontaktbereich verlaufende Teil der Widerstandsstruktur zum Gesamtwiderstand zwischen den beiden Referenzpunkten 53,63 bei.

Eine Aufsicht auf ein Ausführungsbeispiel des erfindungsgemäßen Dünnschichtsensorelements 1 ist in Fig. 1c gezeigt. Im Gegensatz zu den Dünnschichtsensorelementen 1 aus dem Stand der Technik ist die Widerstandsstruktur 4 im Widerstandsbereich 3 folgendermaßen strukturiert: Der erste Abschnitt 5 verzweigt sich in einen ersten Zweig 51 und in einen zweiten Zweig 52, wobei der zweite Zweig 52 zum ersten Zweig 51 parallel geschaltet ist. Auch der zweite Abschnitt 6 verzweigt sich in einen ersten Zweig 61 und in einen zweiten Zweig 62, wobei der zweite Zweig 62 zum ersten Zweig 61 parallel geschaltet ist. Alle Zweige 51,52,61,62 im Kontaktbereich 7 mit Zwischenleitern 81,82,83,84 in voneinander isolierten Kontaktflächen 71,72,73,74 jeweils verbunden. Die mit den zueinander parallel geschalteten Zweigen 51,52 (bzw. 61,62) Zwischenleiter 81,82 (bzw. 83,84) sind dabei in den Referenzpunkten 53,63 parallel geschaltet. Dadurch ist die Widerstandsstruktur 4 anhand der Zwischenleiter 81,82,83,84 in einer Vierleiterschaltung kontaktierbar, wobei im erfindungsgemäßen Dünnschichtsensorelement 1 der Gesamtwiderstand nur der Widerstand der Widerstandsstruktur 4 im Widerstandsbereich 3 zwischen den beiden Referenzpunkten 53,63. Sowohl die Zwischenleiter 81,82,83,84, als auch der Kontaktbereich 7 tragen nicht zum Gesamtwiderstand bei. Dies liegt daran, dass im erfindungsgemäßen Dünnschichtsensorelement 1 die Referenzpunkte 53,63 im Widerstandsbereich 3 liegen.

In diesem Ausführungsbeispiel der Erfindung sind die Referenzpunkte 53,63 in einem dem Kontaktbereich 7 zugewandten Endbereich 9 des Widerstandsbereichs 3 angeordnet. Im Rahmen der Erfindung ist es aber auch möglich, einen oder beide Referenzpunkte 53,63 in einem dem Kontaktbereich 7 abgewandten Endbereich 10 des Widerstandsbereichs 3 anzuordnen. Weiter ist es möglich, mehrere Kontaktbereiche 7, weitere parallel geschaltete Zweige und gegebenenfalls weitere Kontaktflächen vorzusehen.

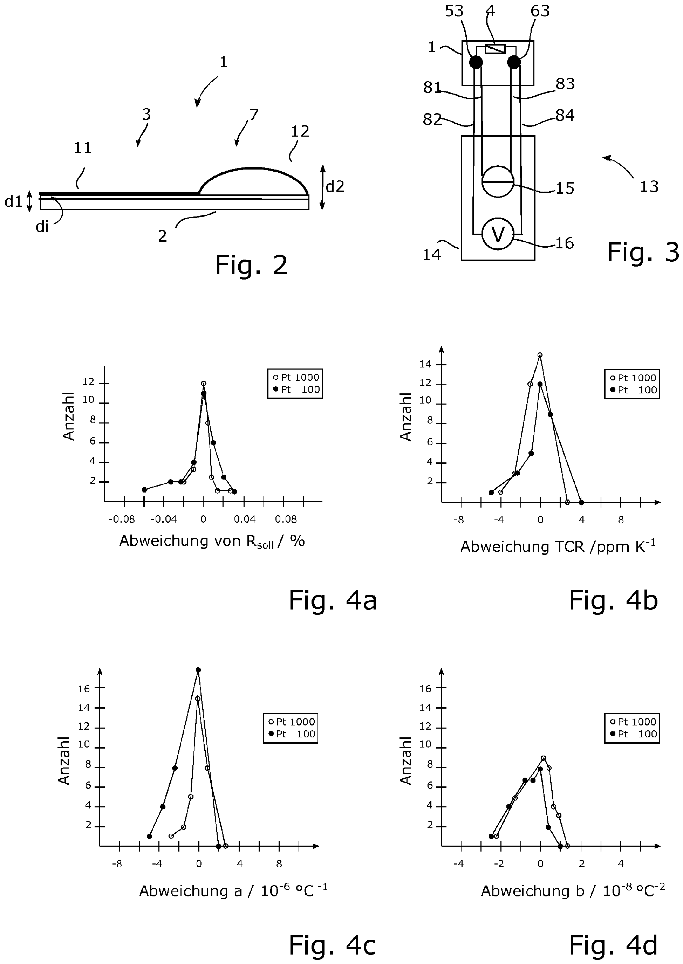

In Fig. 2 ist eine Seitenansicht des Dünnschichtsensorelements 1 gezeigt. Der Einfachheit halber sind hier die Zwischenleiter 81,82,83,83 nicht dargestellt. Die Figur ist zwar keineswegs maßstabsgetreu, zeigt aber, dass die Schichtdicke d1 des Dünnschichtsensorelements 1 im Widerstandsbereich 3 kleiner als die Schichtdicke d2 des Dünnschichtsensorelements 1 im Kontaktbereich 7 ist. Aufgrund der Schweißstellen in den Kontaktflächen 71,72,73,74 ist die zweite Abdeckschicht 12 im Kontaktbereich 7 wesentlich größer als die erste Abdeckschicht 11 im Widerstandsbereich 3. Aus diesem Grund liegen bei Temperaturänderungen in der Regel im Kontaktbereich 7 stärkere mechanische Spannungen als im Widerstandsbereich 3 vor.

Durch die erfindungsgemäße Anordnung der Referenzpunkte 53,63 im Widerstandsbereich haben diese mechanischen Spannungen allerdings einen vernachlässigbaren Einfluss auf die Widerstandsmessung, so dass nur noch die wesentlich kleineren mechanischen Spannungen im Widerstandsbereich 3 im Falle einer Widerstandstruktur 4 aus einem Material mit piezoresistiven Eigenschaften die Widerstandsmessung beeinflussen können.

In der Variante der Erfindung, in der der effektive thermische Ausdehnungskoeffizient $TCE_{eff}$ größer oder gleich dem der Widerstandsstruktur als Bulk-Metall ist, werden durch die Anpassung der thermischen Ausdehnungskoeffizienten piezoresistive Effekte im Vorfeld ausgeschlossen, da sich bei starken Temperaturschwankungen die Verkapselung (Substrat 2, erste und zweite Abdeckungsschicht 11,12) der Widerstandsstruktur 4 zumindest im gleichen Maße wie die Widerstandsstruktur 4 selbst ausdehnt. Dazu kann das Substrat 2 und/oder die Abdeckungsschicht 11,12 aus mehreren Schichten bestehen. Dabei sollte in einer Variante der Erfindung die nicht-leitende Oberflächenschicht des Substrats 2 eine minimale Schichtdicke diso von 1 Mikrometer aufweisen.

In Fig. 3 ist eine Aufsicht auf das erfindungsgemäße Widerstandsthermometer 13 gezeigt. Zusätzlich zu dem Dünnschichtsensorelement 1 mit der Widerstandstruktur 4 weist das Widerstandsthermometer 13 noch eine Regel-/Auswerteeinheit 14 aus. Die Regel-/Auswerteeinheit 14 weist dabei Elektronikkomponenten auf, die das Dünnschichtsensorelement 1 ansteuern, dessen elektronischen Signale auswerten und daraus eine Temperatur ermitteln. Dazu sind die Zwischenleiter 81,82,83,84 mit der Regel-/Auswerteeinheit 14 verbunden. In diesem Ausführungsbeispiel ist eine Stromquelle 15 vorgesehen, welche die Widerstandsstruktur 4 über die beiden Zwischenleiter 81,83 mit einem Strom beaufschlagt. Es ist weiter ein Spannungsmessgerät 16 vorgesehen, welches anhand der beiden weiteren Zwischenleiter 82,84 über die Widerstandsstruktur 4 abfallende Spannung zwischen den Referenzpunkten 53,63 bestimmt. Der Einfachheit halber sind der Widerstandsbereich 3 und der Kontaktbereich 7 hier nicht gezeigt; die Referenzpunkt liegen aber auch hier erfindungsgemäß im Widerstandsbereich. Die Regel-/Auswerteeinheit 14 bestimmt anhand des beaufschlagten Stromes der Stromquelle 15 und dem Spannungsabfall den Widerstand der Widerstandsstruktur 4 zwischen den Referenzpunkten 53,63. Anhand in der Regel-/Auswerteeinheit 14 hinterlegter Widerstandskennlinien kann so die Temperatur bestimmt werden.

Fig. 4a-4c zeigen experimentelle Untersuchungen bezüglich der Genauigkeit des erfindungsgemäßen Widerstandsthermometers 13, wobei einmal die Ausführungsform Pt100 (gefüllte Punkte) und einmal die Ausführungsform Pt1000 (ungefüllte Punkte) untersucht wurde. Es handelt sich jeweils um experimentelle Untersuchungen an einer Reihe von Widerstandsthermometern 13 gleicher Bauart. In den Figuren 4a-d sind verschiedene Gütekriterien für die Genauigkeit dieser Reihe von Widerstandsthermometern 13 dargestellt. Dabei ist auf der x-Achse jeweils die Abweichung von einem Sollwert aufgetragen. Auf der y-Achse ist die Häufigkeit bzw. die Anzahl von Widerstandsthermometern 13 aufgetragen, bei denen eine gewisse Abweichung festgestellt wurde. Anhand dieser Häufigkeitsverteilungen kann so über die Untersuchungen bezüglich kann der Fertigungstoleranz gleichartiger Widerstandsthermometers 13 die Güteklasse des erfindungsgemäßen Widerstandsthermometers 13 geschätzt werden.

In Fig. 4a ist dabei die Häufigkeitsverteilung der Abweichung des Widerstandswerts des Widerstandsthermometers 13 vom nominellen Widerstandswert $R_{soll}$ (d.h. 100 Ohm und 1000 Ohm) in Prozent gezeigt. Die experimentellen Untersuchungen zeigen, dass ein Großteil der erfindungsgemäßen Widerstandsthermometer 13 um weniger als 0.02 % von nominellen Widerstandswert $R_{soll}$ abweicht.

In Fig. 4b ist die Häufigkeitsverteilung der Abweichung des mittleren. Temperaturkoeffizienten (TCR-Wert) von einem Sollwert $TCR_{soll}$ gezeigt. Der mittlere

Temperaturkoeffizient ist dabei definiert als die Differenz der Widerstände geteilt durch den Widerstand bei 0°C und geteilt durch die Differenz der Temperaturen in der Spanne zwischen 0°C und 100°C also:

$$TCR = \frac{R_{T1} - R_{T2}}{(T_1 - T_2)\cdot R_{T2}},$$

wobei gilt: $T_1$ = 100 °C, $T_2$ = 0 °C, und wobei $R_{T1}$ der Widerstand bei $T_1$ und $R_{T2}$ der Widerstand bei $T_2$ sind.

Es zeigt sich, dass für das erfindungsgemäße Widerstandsthermometer 13 eine Abweichung des TCR-Werts von einem Sollwert $TCR_{soll}$ von unter 5 ppm $K^{-1}$ vorliegt.

Der vom Widerstandsthermometer 13 ermittelte Widerstandswert wird im Temperaturbereich 0° < T < 200°C anhand einer Widerstandskennlinie von quadratischer Ordnung beschrieben.

$$R(T) = R_{T=0°C}\left(1 + a \times T + b \times T^2\right)$$

In Figur 4c und 4d ist die Häufigkeitsverteilung der Abweichung des linearen Koeffizienten (Fig. 4c) und des quadratischen Koeffizienten (Fig. 4d) der Widerstandskennlinie aufgetragen. Es zeigt sich, dass der lineare Koeffizient a der Widerstandskennlinie um weniger als $10^{-5}$ °$C^{-1}$ von einem Sollwert $a_{soll}$ abweicht (siehe Fig. 4c) und dass der quadratische Koeffizient b der Widerstandskennlinie um weniger als $10^{-7}$ °$C^{-2}$ von einem Sollwert $b_{soll}$ abweicht.

Die experimentellen Untersuchungen zeigen, dass das erfindungsgemäße Widerstandsthermometer 13 von sehr großer Genauigkeit ist. Erfahrungsgemäß bedeutet dies, dass unter üblichen Produktionsbedingungen ein Widerstandsthermometer 13 mit dem erfindungsgemäßen Dünnschichtsensorelement 1 in über 50% der Fälle in der Genauigkeitsklasse 1/5 B nach DIN EN 60751:2009-05 liegt.

In der besonders vorteilhaften Ausgestaltung des erfindungsgemäßen Dünnschichtsensorelement 1, in der die thermischen Ausdehnungskoeffizienten $TCE_{eff}$ aneinander angepasst sind, ist aufgrund der verschwindenden Hystereseeffekte sogar eine Widerstandsthermometer 13 mit einer normentreuen Kennlinie zu erwarten, so dass ein Großteil der derartigen Widerstandsthermometer 13 in der Genauigkeitsklasse 1/10 B nach DIN EN 60751:2009-05 liegt.

**Bezugszeichenliste**

| | |
|---|---|
| 1 | Dünnschichtsensorelement |
| 2 | Substrat |
| 3 | Widerstandsbereich |
| 4 | Widerstandsstruktur |
| 5 | erster Abschnitt |

| 51 | erster Zweig |
| 52 | zweiter Zweig |
| 53 | erster Referenzpunkt |
| 53a,b | Anschlussleiter |
| 6 | zweiter Abschnitt |
| 61 | erster Zweig |
| 62 | zweiter Zweig |
| 63 | zweiter Referenzpunkt |
| 63a,b | Anschlussleiter |
| 7 | Kontaktbereich |
| 71-74 | erste-vierte Kontaktfläche |
| 81-84 | erster-vierter Zwischenleiter |
| 9 | dem Kontaktbereich zugewandter Endbereich |
| 10 | dem Kontaktbereich abgewandter Endbereich |
| 11 | erste Abdeckungsschicht |
| 12 | zweite Abdeckungsschicht |
| 13 | Widerstandsthermometer |
| 14 | Regel-/Auswerteeinheit |
| 15 | Stromquelle |
| 16 | Spannungsmessgerät |
| d1 | Schichtdicke im Widerstandsbereich |
| d2 | Schichtdicke im Kontaktbereich |
| diso | Schichtdicke der nicht-leitenden Schicht des Substrats |
| $TCE_{eff}$ | effektiver thermischer Ausdehnungskoeffizient |
| TCR | Temperaturkoeffizient |
| a | linearer Koeffizient der Widerstandskennlinie |
| b | quadratischer Koeffizient der Widerstandskennlinie |

**Patentansprüche**

1. Dünnschichtsensorelement (1) zur Bestimmung und/oder Überwachung der Temperatur,

   wobei das Dünnschichtsensorelement (1) ein Substrat (2), eine Widerstandsstruktur (4), einen ersten Zwischenleiter (81), einen zweiten Zwischenleiter (82), einen dritten Zwischenleiter (83) und einen vierten Zwischenleiter (84) aufweist,
   wobei in einem ersten Bereich des Substrats (2) ein Widerstandsbereich (3) mit der Widerstandsstruktur (4) vorgesehen ist,
   wobei die Widerstandsstruktur (4) einen temperaturabhängigen elektrischen Widerstand aufweist und aus einem kaltleitenden Material besteht,
   **dadurch gekennzeichnet, dass** die Widerstandsstruktur (4) so strukturiert ist,

   - dass durch eine Verzweigung eines ersten Abschnitts (5) der Widerstandsstruktur (4) in einen ersten Zweig (51) und in zumindest einen weiteren, zum ersten Zweig (51) parallelen geschalteten zweiten Zweig (52) ein erster Referenzpunkt (53) im Widerstandsbereich (3) gebildet wird und
   - dass durch eine Verzweigung eines zweiten Abschnitts (6) der Widerstandsstruktur (4) in einen ersten Zweig (61) und in zumindest einen weiteren, zum ersten Zweig parallelen geschalteten Zweig (62) ein zweiter Referenzpunkt (63) im Widerstandsbereich (3) gebildet wird,

   wobei auf dem Substrat zumindest ein an den Widerstandsbereich (3) angrenzender Bereich als Kontaktbereich (7) mit gegeneinander elektrisch isolierten Kontaktflächen (71, 72, 73, 74) vorgesehen ist, wobei im Kontaktbereich (7)

   - der erste Zweig des ersten Abschnitts (51) der Widerstandsstruktur (4) mit dem ersten Zwischenleiter (81) in einer ersten Kontaktfläche (71),
   - der zweite Zweig des ersten Abschnitts (52) der Widerstandsstruktur (4) mit dem zweiten Zwischenleiter (82) in einer zweiten Kontaktfläche (72),
   - der erste Zweig des zweiten Abschnitts (61) der Widerstandsstruktur (4) mit dem dritten Zwischenleiter (83) in einer dritten Kontaktfläche (73), und der zweite Zweig des zweiten Abschnitts (62) der Widerstandsstruktur (4) mit dem vierten Zwischenleiter (84) in einer vierten Kontaktfläche (74) verbunden ist,

   und wobei im Widerstandsbereich (3) eine erste Abdeckungsschicht (11) zur Abdeckung der Widerstandsstruktur (4) und im Kontaktbereich (7) eine zweite Abdeckungsschicht (12) zur Abdeckung der Kontaktflächen (71,72,73,74) angeordnet sind.

2. Dünnschichtsensorelement (1) nach Anspruch 1, wobei der erste und/oder der zweite Referenzpunkt (53,63) in einem dem Kontaktbereich (7) zugewandten Endbereich (9) des Widerstandsbereichs (3) angeordnet sind.

3. Dünnschichtsensorelement (1) nach Anspruch 1,

   wobei der erste und/oder der zweite Referenzpunkt (53,63) in einem Bereich angeordnet sind, welcher Bereich zwischen einem dem Kontaktbereich (4) abgewandten Endbereich (10) des Widerstandsbereichs (3) und einem dem Kontaktbereich (7) zugewandten Endbereich (9) des Widerstandsbereichs (3) liegt.

4. Dünnschichtsensorelement (1) nach Anspruch 2 oder 3,

wobei die Widerstandstruktur (4) ein metallischer Kaltleiter aus Platin und/oder Nickel ist.

5. Dünnschichtsensorelement (1) nach zumindest einem der vorherigen Ansprüche,
wobei die Schichtdicke (d1) des Dünnschichtsensorelements (1) im Widerstandsbereich (3) kleiner als die Schichtdicke (d2) des Dünnschichtsensorelements (1) im Kontaktbereich (7) ist.

6. Dünnschichtsensorelement (1) nach zumindest einem der vorherigen Ansprüche,
wobei die Gesamtheit aus Substrat (2), Widerstandsstruktur (4) und Abdeckungsschicht (11) im Widerstandsbereich (3) einen effektiven thermischen Ausdehnungskoeffizienten (TCE$_{eff}$) aufweist und wobei der effektive thermische Ausdehnungskoeffizient (TCE$_{eff}$) größer oder gleich dem thermischen Ausdehnungskoeffizienten des Materials der Widerstandsstruktur (4) als Bulk-Metall ist.

7. Dünnschichtsensorelement (1) nach zumindest einem der vorherigen Ansprüche,
wobei das Substrat (2) ein zumindest teilweise keramisches Substrat (2) ist.

8. Dünnschichtsensorelement (1) nach zumindest einem der vorherigen Ansprüche,
wobei das Substrat (2) Aluminiumoxid und/oder Zirkonoxid aufweist.

9. Dünnschichtsensorelement (1) nach zumindest einem der vorherigen Ansprüche,

wobei die Oberflächenschicht des Substrats (2) nicht-leitend ist,
wobei die nicht-leitende Oberflächenschicht des Substrats (2) eine minimale Schichtdicke (diso) von 1 Mikrometer aufweist.

10. Dünnschichtsensorelement (1) nach zumindest einem der vorherigen Ansprüche,
wobei die Zwischenleiter (81,82,83,84) aus dem gleichen Material sind.

11. Dünnschichtsensorelement (1) nach zumindest einem der vorherigen Ansprüche,
wobei die Widerstandsstruktur (4) eine Schichtdicke von 0.1-10 Mikrometer aufweist.

12. Dünnschichtsensorelement (1) nach zumindest einem der vorherigen Ansprüche,

wobei die Abdeckungsschicht (11) im Widerstandsbereich (3) eine maximale Schichtdicke von 50 Mikrometer aufweist,
und wobei die Abdeckungsschicht (12) im Kontaktbereich (7) eine maximale Schichtdicke von 2.0 Millimeter aufweist.

13. Widerstandsthermometer (13), aufweisend ein Dünnschichtsensorelement (1) nach zumindest einem der vorherigen Ansprüche sowie eine Regel-/Auswerteeinheit (14),

wobei die Zwischenleiter (81,82,83,84) des Dünnschichtsensorelements (1) mit der Regel-/Auswerteeinheit verbunden sind,
und wobei die Regel-/Auswerteeinheit (14) dazu ausgestaltet ist,
mittels der zumindest vier Zwischenleiter (81,82,83,84) das Dünnschichtsensorelement (1) in einer Vierleiterschaltung zu betreiben und den Widerstand der Widerstandsstruktur (4) zwischen dem ersten Referenzpunkt (53) und dem zweiten Referenzpunkt (63) zu ermitteln, und aus dem ermittelten Widerstand die an der Widerstandsstruktur (4) vorliegende Temperatur zu bestimmen.

**Claims**

1. Thin-film sensor element (1) designed to determine and/or monitor the temperature,

wherein the thin-film sensor element (1) has a substrate (2), a resistance structure (4), a first intermediate conductor (81), a second intermediate conductor (82), a third intermediate conductor (83) and a fourth intermediate conductor (84),
wherein a resistance area (3) with the resistance structure (4) is provided in a first area of the substrate (2),
wherein the resistance structure (4) has a temperature-dependent electrical resistance and is made from a cold-conducting material,
**characterized in that** the resistance structure (4) is structured in such a way

- that a first reference point (53) is formed in the resistance area (3) by a branching of a first section (5) of the resistance structure (4) into a first branch (51) and into at least an additional second branch (52) switched in parallel with the first branch (51), and
- that a second reference point (63) is formed in the resistance area (3) by a branching of a second section (6) of the resistance structure (4) into a first branch (61) and into at least an additional branch (62) switched in parallel with the first branch,

wherein at least a zone adjacent to the resistance area (3) is provided on the substrate as a contact area (7) with contact surfaces (71, 72, 73, 74) electrically isolated from one another, wherein in the contact area (7)

> - the first branch of the first section (51) of the resistance structure (4) is connected to the first intermediate conductor (81) in a first contact surface (71),
> - the second branch of the first section (52) of the resistance structure (4) is connected to the second intermediate conductor (82) in a second contact surface (72),
> - the first branch of the second section (61) of the resistance structure (4) is connected to the third intermediate conductor (83) in a third contact surface (73), and the second branch of the second section (62) of the resistance structure (4) is connected to the fourth intermediate conductor (84) in a fourth contact surface (74),

> and wherein a first cover layer (11) designed to cover the resistance structure (4) is provided in the resistance area (3) and a second cover layer (12) designed to cover the contact surfaces (71, 72, 73, 74) is provided in the contact area (7).

2. Thin-film sensor element (1) as claimed in Claim 1, wherein the first and/or the second reference point (53, 63) is/are arranged in an end section (9) of the resistance area (3) facing towards the contact area (7).

3. Thin-film sensor element (1) as claimed in Claim 1, wherein the first and/or the second reference point (53, 63) is/are arranged in an area which is located between an end section (10) of the resistance area (3) facing away from the contact area (4) and an end section (9) of the resistance area (3) facing towards the contact area (7).

4. Thin-film sensor element (1) as claimed in Claim 2 or 3, wherein the resistance structure (4) is a metal cold conductor made of platinum and/or nickel.

5. Thin-film sensor element (1) as claimed in at least one of the previous claims, wherein the layer thickness (d1) of the thin-film sensor element (1) in the resistance area (3) is less than the layer thickness (d2) of the thin-film sensor element (1) in the contact area (7).

6. Thin-film sensor element (1) as claimed in at least one of the previous claims, wherein the ensemble consisting of the substrate (2), the resistance structure (4) and the cover layer (11) in the resistance area (3) has an effective thermal expansion coefficient ($TCE_{eff}$) and wherein the effective thermal expansion coefficient ($TCE_{eff}$) is greater than or equal to the thermal expansion coefficient of the material of the resistance structure (4) as bulk metal.

7. Thin-film sensor element (1) as claimed in at least one of the previous claims, wherein the substrate (2) is an at least partially ceramic substrate (2).

8. Thin-film sensor element (1) as claimed in at least one of the previous claims, wherein the substrate (2) comprises aluminum oxide and/or zirconium oxide.

9. Thin-film sensor element (1) as claimed in at least one of the previous claims, wherein the surface layer of the substrate (2) is non-conductive, wherein the non-conductive surface layer of the substrate (2) has a minimum layer thickness (diso) of 1 micrometer.

10. Thin-film sensor element (1) as claimed in at least one of the previous claims, wherein the intermediate conductors (81, 82, 83, 84) are made from the same material.

11. Thin-film sensor element (1) as claimed in at least one of the previous claims, wherein the resistance structure (4) has a layer thickness of 0.1 to 10 micrometers.

12. Thin-film sensor element (1) as claimed in at least one of the previous claims,

> wherein the cover layer (11) in the resistance area (3) has a maximum layer thickness of 50 micrometers,
> and wherein the cover layer (12) in the contact area (7) has a maximum layer thickness of 2.0 millimeters.

13. Resistance thermometer (13), which comprises a thin-film sensor element (1) as claimed in at least one of the previous claims, as well as a control/evaluation unit (14), wherein the intermediate conductors (81, 82, 83, 84) of the thin-film sensor element (1) are connected to the control/evaluation unit,

> and wherein the control/evaluation unit (14) is designed to operate the thin-film sensor element (1) in a four-wire circuit by means of the at least four intermediate conductors (81 82, 83, 84) and to determine the resistance of the resistance structure (4) between the first reference point (53) and the second reference point (63), and to determine the temperature present at the resistance structure (4) from the resistance value determined.

**Revendications**

1. Élément capteur à couches minces (1) destiné à la détermination et/ou à la surveillance de la température,

l'élément capteur à couches minces (1) présentant un substrat (2), une structure résistive (4), un premier conducteur intermédiaire (81), un deuxième conducteur intermédiaire (82), un troisième conducteur intermédiaire (83) et un quatrième conducteur intermédiaire (84), une zone résistive (3) avec la structure résistive (4) étant prévue dans une première zone du substrat (2), la structure résistive (4) comportant une résistance électrique dépendant de la température et étant composée d'un matériau présentant un coefficient de température positif, **caractérisé en ce que** la structure résistive (4) est structurée de telle sorte

- qu'un premier point de référence (53) est formé dans la zone résistive (3) par une dérivation d'une première section (5) de la structure résistive (4) en une première branche (51) et en au moins une autre deuxième branche (52) couplée en parallèle à la première branche (51), et
- qu'un deuxième point de référence (63) est formé dans la zone résistive (3) par une dérivation d'une deuxième section (6) de la structure résistive (4) en une première branche (61) et en au moins une autre branche (62) couplée en parallèle à la première branche,

au moins une zone adjacente à la zone résistive (3) étant prévue sur le substrat comme zone de contact (7) avec des surfaces de contact (71, 72, 73, 74) isolées électriquement les unes des autres,

- la première branche de la première section (51) de la structure de résistive (4) étant reliée au premier conducteur intermédiaire (81) dans une première surface de contact (71) de la zone de contact (7),
- la deuxième branche de la première section (52) de la structure résistive (4) étant reliée au deuxième conducteur intermédiaire (82) dans une deuxième surface de contact (72) de la zone de contact (7),
- la première branche de la deuxième section (61) de la structure résistive (4) étant reliée au troisième conducteur intermédiaire (83) dans une troisième surface de contact (73) de la zone de contact (7), et la deuxième branche de la deuxième section (62) de la structure résistive (4) étant reliée au quatrième conducteur intermédiaire (84) dans une quatrième surface de contact (74) de la zone de contact (7),

et une première couche de recouvrement (11) destinée à recouvrir la structure résistive (4) étant disposée dans la zone résistive (3) et une deuxième couche de recouvrement destinée à recouvrir les surfaces de contact (71, 72, 73, 74) étant disposée dans la zone de contact (7).

2. Élément capteur à couches minces (1) selon la revendication 1, pour lequel le premier et/ou le deuxième point de référence (53, 63) est/sont disposé(s) dans une zone d'extrémité (9) de la zone résistive (3) faisant face à la zone de contact (7).

3. Élément capteur à couches minces (1) selon la revendication 1, pour lequel le premier et/ou le deuxième point de référence (53, 63) est/sont disposé(s) dans une zone, laquelle zone se trouve entre une zone d'extrémité (10) de la zone résistive (3) opposée à la zone de contact (4) et une zone d'extrémité (9) de la zone résistive (3) tournée vers la zone de contact (7).

4. Élément capteur à couches minces (1) selon la revendication 2 ou 3, pour lequel la structure résistive (4) est une thermistance CTP métallique en platine et/ou en nickel.

5. Élément capteur à couches minces (1) selon au moins l'une des revendications précédentes, pour lequel l'épaisseur de couche (d1) de l'élément capteur à couches minces (1) dans la zone résistive (3) est inférieure à l'épaisseur de couche (d2) de l'élément capteur à couches minces (1) dans la zone de contact (7).

6. Élément capteur à couches minces (1) selon au moins l'une des revendications précédentes, pour lequel l'ensemble du substrat (2), de la structure résistive (4) et de la couche de recouvrement (11) dans la zone résistive (3) présente un coefficient effectif de dilatation thermique ($TCE_{eff}$) et le coefficient effectif de dilatation thermique ($TCE_{eff}$) étant supérieur ou égal au coefficient de dilatation thermique du matériau de la structure résistive (4) en tant que métal massif.

7. Élément capteur à couches minces (1) selon au moins l'une des revendications précédentes, pour lequel le substrat (2) est un substrat au moins partiellement céramique (2).

8. Élément capteur à couches minces (1) selon au moins l'une des revendications précédentes, pour lequel le substrat (2) comprend de l'alumine et/ou de la zircone.

9. Élément capteur à couches minces (1) selon au moins l'une des revendications précédentes, pour lequel la couche superficielle du substrat (2) est non conductrice, la couche superficielle non conductrice du substrat (2) présentant une épaisseur de couche minimale (diso) de 1 micromètre.

10. Élément capteur à couches minces (1) selon au moins l'une des revendications précédentes, pour lequel les conducteurs intermédiaires (81, 82, 83, 84) sont constitués d'un même matériau.

11. Élément capteur à couches minces (1) selon au moins l'une des revendications précédentes, pour lequel la structure résistive (4) présente une épaisseur de couche de 0,1 à 10 microns.

12. Élément capteur à couches minces (1) selon au moins l'une des revendications précédentes,

    pour lequel la couche de recouvrement (11) dans la zone de résistance (3) présente une épaisseur de couche maximale de 50 micromètres,
    et pour lequel la couche de recouvrement (12) dans la zone de contact (7) présente une épaisseur de couche maximale de 2,0 millimètres.

13. Capteur de température à thermorésistance (13), lequel comprend un élément capteur à couches minces (1) selon au moins l'une des revendications précédentes, ainsi qu'une unité de régulation / d'exploitation (14), les conducteurs intermédiaires (81, 82, 83, 84) de l'élément capteur à couches minces (1) étant reliés avec l'unité de régulation / d'exploitation,

    et l'unité de régulation / d'exploitation (14) étant conçue pour faire fonctionner l'élément capteur à couches minces (1) dans un circuit à quatre conducteurs au moyen des au moins quatre conducteurs intermédiaires (81 82, 83, 84) et pour déterminer la résistance de la structure résistive (4) entre le premier point de référence (53) et le deuxième point de référence (63),
    et pour déterminer la température présente au niveau de la structure résistive (4) à partir de la résistance déterminée.

Fig. 1c

Fig. 1b
(St.d.T)

Fig. 1a
(St.d.T)

Fig. 2

Fig. 3

Fig. 4a

Fig. 4b

Fig. 4c

Fig. 4d

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 00102007023434 A1

- EP 0446667 A2